# EUROPÄISCHE PATENTSCHRIFT

(11) **EP 1 258 439 B1**
(45) Veröffentlichungstag und Bekanntmachung des Hinweises auf die Patenterteilung: **17.09.2003**
(21) Anmeldenummer: 02010464.2
(22) Anmeldetag: 08.05.2002
(51) Int. Cl.: B65G 19/02

(54) **Anlage zum Transport von Objekten auf Förderbahnen mittels einer förderkammangetriebenen Transportrolle**
Installations for conveying items on conveying paths by means of cam-driven transport roller
Installation pour transporter des objets sur des voies de convoyage au moyen d'un rouleau de transport mû par came

(30) Priorität: 15.05.2001 DE 10123598
(43) Veröffentlichungstag der Anmeldung: 20.11.2002
(73) Patentinhaber: Gärtner, Franz, 97656 Oberelsbach (DE)
(72) Erfinder: Gärtner, Franz, 97656 Oberelsbach (DE)
(74) Vertreter: Patentanwälte Dr. Solf & Zapf

(56) Entgegenhaltungen:
- EP-A- 0 451 581
- EP-A- 1 013 569

## Beschreibung

Die Erfindung betrifft eine Anlage zum Transport von Objekten, insbesondere von auf Bügeln hängenden Kleidungsstücken nach dem Oberbegriff des Anspruch 1.

Derartige Anlagen transportieren die Objekte auf Förderbahnen mittels einer Transportrolle, enthaltend zwei parallel zueinander gerichtet beabstandete, stirnseitige Flansche und ein zwischenliegendes Mittelteil sowie eine zwischen den Flanschen und dem Mittelteil mittig hindurchführende Durchgangsöffnung, wobei das Mittelteil mindestens ein peripheres, ringförmiges Umfangsteil aufweist, das separat von beiden Flanschen rotationsfähig ist, und wobei beide Flansche untereinander und mit dem Umfangsteil derart in Verbindung stehen, dass sich bei einer förderbahnauflagebedingten Rotation des Umfangsteils beide Flansche in einem von der Rotation unabhängigen Ruhezustand befinden, wobei ein hakenförmiges Trägerelement für ein zu transportierendes Objekt die Durchgangsöffnung durchsetzt und mit seinem freien Ende aus dieser vorsteht.

Die Transportrolle der vorstehend genannten Transportanlage ist aus der EP 10 13 569 A1 bekannt und dazu ausgebildet, dass im Stau von mindestens zwei Transportrollen der auftretende Glätteeffekt vermieden wird.

Eine Aufgabe der vorliegenden Erfindung besteht darin, eine Anlage zum Transport von Objekten der im Oberbegriff des Anspruchs 1 genannten Art zu schaffen, die mit einfachen Mitteln einen sicheren Transport von zu transportierenden Objekten auf Förderbahnen gewährleistet.

Gelöst wird diese Aufgabe durch die Merkmale des Anspruchs 1. Vorteilhafte Weiterbildungen der Erfindung sind in den Unteransprüchen angegeben.

Demnach sieht die Erfindung vor, dass die Förderbahn einen feststehenden Rollsteg mit einer Transportrollen-Laufbahn auf ihrer Oberseite umfasst, auf welchem die Transportrolle reitet, deren beiden Flansche den Rollsteg seitlich umgreifen und deren Umfangsteil mit der Transportrollen-Laufbahn im Eingriff steht, und dass am Rollsteg entlang, seitlich von diesem zumindest entsprechend der Stärke des dort überstehenden Flansches beabstandet ein kammartiges Förderorgan geführt ist, dessen Lücken bzw. Spalträume 78 zum Eingriff des freien Endes des hakenförmigen Trägerelements bemessen sind.

Diese Art der Transportrollenbewegung ermöglicht eine einfache Ausbildung des Transportmittels für die Transportrolle in Gestalt eines kammartigen Förderorgans, das entlang der Förderbahn beweglich ist, und in dessen Lücken das freie Ende des hakenförmigen Trägerelements für zu transportierende Waren zur Mitnahme der Transportrolle aufnehmbar ist.

Vorteilhafterweise ist das kammartige Förderorgan mit einer parallel zur Förderbahn verlaufenden Gliederkette, vor allem einer Seitenbogenkette einer Antriebseinrichtung verbunden ist.

Das kammartige Förderorgan umfasst bevorzugt Zinken in Gestalt von gegenseitig regelmäßig beabstandeten Mitnahmestiften, die sich senkrecht zur Durchgangsöffnung der Transportrolle sowie senkrecht zur Transportrollen-Laufbahn erstrecken, um einen möglichst hohen Spaltraum zum sicheren Eingriff des freien Endes des hakenförmigen Trägerelements bereitzustellen.

Gemäß einer besonders vorteilhaften Weiterbildung der Erfindung ist der Rollsteg, der die Transportrollen-Laufbahn bereitstellt, als Teil einer Profilschiene gebildet, in welcher die Gliederkette geführt ist.

Diese Profilschiene besitzt bevorzugt allgemein C-förmigen Querschnitt, wobei eine aufwärts weisende Kante der C-Profilschiene die Transportrollen-Laufbahn bildet.

Das kammartige Förderorgan überspannt bevorzugt mit seinen Zinken den Spalt zwischen den aufeinander zu weisenden Kanten der C-Profilschiene vollständig zur Bereitstellung eines oben und unten begrenzten Spaltraums, um eine sichere Halterung des freien Endes des hakenförmigen Trägerelements und damit der Transportrolle während des gesamten Förderhubes bereitzustellen.

Gemäß einer vorteilhaften Weiterbildung der Erfindung ist vorgesehen, dass sie eine Aufgabestelle bzw. Einschleusstelle für die Transportrolle(n) in die Förderbahn mit einer Gefällestrecke aufweist, welche seitlich in die Förderbahn mündet und einen feststehenden Rollsteg mit einer Transportrollen-Laufbahn 68) auf ihrer Oberseite umfasst, der in den Rollsteg der Förderbahn einmündet, wobei in der Gefällestrecke, auf welcher die Transportrolle(n) durch Schwerkrafteinwirkung zu der Förderbahn gefördert wird bzw. werden eine Einrichtung zum Rückhalten der Transportrolle(n) vorgesehen ist, die synchron zur Anwesenheit einer Lücke des Förderorgans in der Aufgabestelle und unter Berücksichtigung der Zeitdauer bis zum Eintreffen der jeweiligen Transportrolle an dieser Lücke freigebbar ist bzw. sind.

An dieser Einschleusstelle bzw. allgemein im Falle von Weichen, die in die Förderbahn münden, ist die Lückensequenz des Förderorgans auf die Taktzeit der jeweiligen Weiche abgestimmt. Hierzu ist ein entsprechender Taktgenerator, beispielsweise in Gestalt eines Zahnrads vorgesehen, der bzw. das die Lücken des kammartigen Förderorgans bzw. dessen beabstandete Zinken erfasst und die Weiche entsprechend synchron steuert.

Die Rückhalteeinrichtung bei der vorstehend genannten Einschleusstelle für Transportrollen in die Förderbahn umfasst bevorzugt einen Rückhaltestift zur Freigabe einer vorauseilenden Transportrolle und einen weiteren Rückhaltestift zum Rückhalten nacheilender Transportrollen, wobei die Rückhaltestifte in Richtung auf ihre Längsachsen zwischen einer Rückhaltestellung vor der jeweiligen Transportrolle und einer Freigabestellung beweglich sind, in welcher sie außer Eingriff mit der jeweiligen Transportrolle stehen. Bevorzugt sind die Rückhaltestifte im wesentlichen senkrecht zur Transportrollen-Laufbahn der Gefällestrecke beweglich.

Ferner ist erfindungsgemäß vorgesehen, dass die Förderbahn zumindest eine von ihr abzweigende Ausschleusstelle bzw. Abwurflinie mit einer Gefällestrecke umfasst, welche einen feststehenden Rollsteg mit einer Transportrollen-Laufbahn auf ihrer Oberseite aufweist und auf welcher die Transportrolle(n) durch Schwerkrafteinwirkung zu einer Sammelstelle gefördert wird bzw. werden, wobei die Ausschleusstelle eine Weiche umfasst, die wahlweise an die Förderbahn anstellbar ist, um die Transportrolle(n) unter Ausrücken des freien Endes des Ihre Durchgangsöffnung durchsetzenden hakenförmigen Trägerelements auf die Gefällestrecke der Ausschleusstelle zu überführen.

Nachfolgend wird die Erfindung anhand der Zeichnung beispielhaft näher erläutert; in dieser zeigen:
- Fig. 1: schematisch eine Ausführungsform einer Anlage zum Transportieren von auf Bügeln hängenden Kleidungsstükken mit einstufiger Sortierung,
- Fig. 2: schematisch eine Ausführungsform einer Anlage zum Transportieren von auf Bügeln hängenden Kleidungsstükken mit zweistufiger Sortierung,
- Fig. 3 bis 5: eine Ausführungsform der Einschleusstelle zum Einschleusen von auf Bügeln hängenden Kleidungsstücken in die Förderbahn der Anlage von Fig. 1 bzw. Fig. 2, wobei Fig. 1 die Abtrennung einer vorauseilenden Transportrolle von nacheilenden Transportrollen zeigt, wobei Fig. 2 die Überführung der gemäß Fig. 3 vereinzelten Transportrolle zeigt, und wobei Fig. 5 den Beginn der nächsten Vereinzelung nach übergebener vorauseilender Transportrolle zeigt,
- Fig. 6: eine Ausschleusstelle der Anlage von Fig. 1 bzw. Fig. 2 zum Ausschleusen von Transportrollen mit auf Bügeln hängenden Kleidungsstücken aus der Förderbahn,
- Fig. 7: eine schematische perspektivische Darstellung einer Transportrolle der Anlage von Fig. 1 bzw. Fig. 2 auf dem Fördersteg der Förderbahn der Anlage,
- Fig. 8: eine Vorderansicht der Transportrolle von Fig. 7 quer zur Förderbahn, und
- Fig. 9: einen Querschnitt durch die Transportlinie entlang der Linie I-I von Fig. 1 ohne Trägerelement, Förderbahn und Strichkodierung, aber mit Aussparungen und einem Halterungsteil.

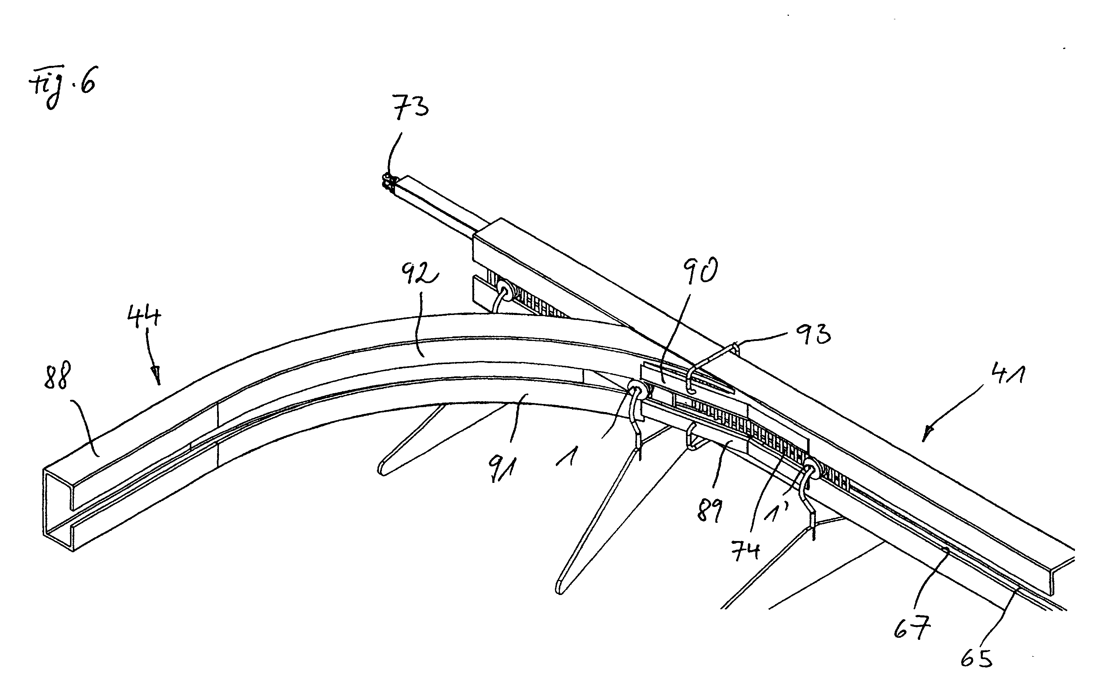

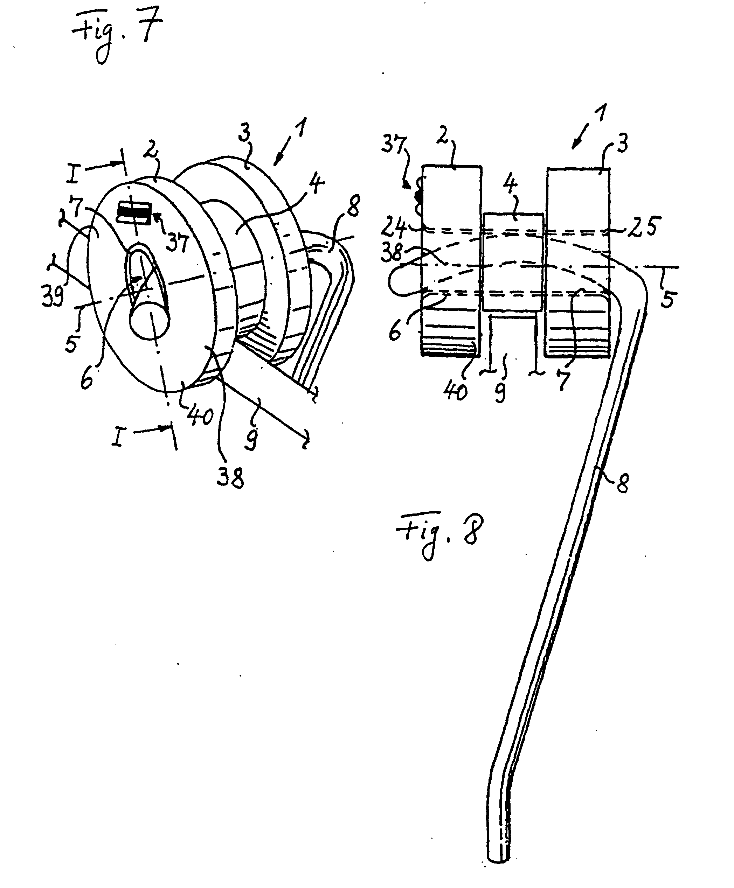

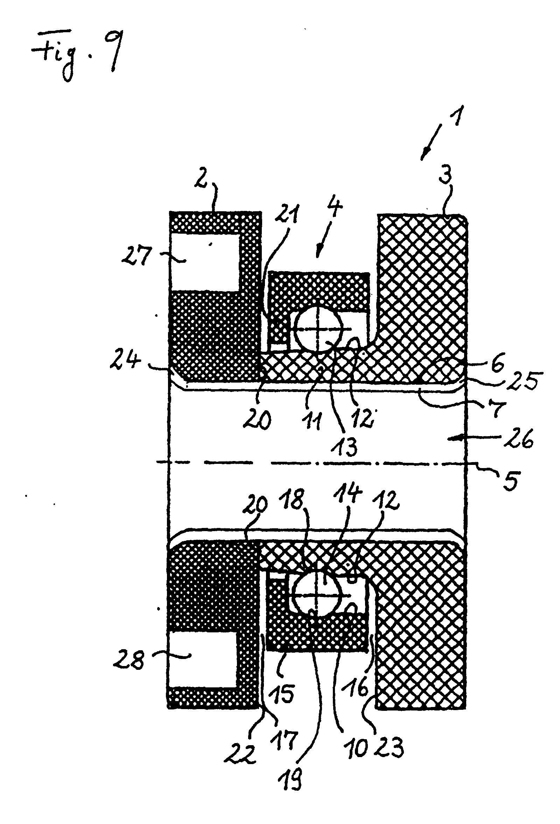

Da das erfindungsgemäße Förderprinzip einer Anlage zum Transport von Objekten auf einer speziell ausgestalteten Transportrolle mit feststehenden Seitenteilen und rotierfähigem zentralen Ringteil basiert, soll diese Transportrolle, die beispielsweise in der EP 1 013 569 A1 näher beschrieben ist, nachfolgend anhand der Fig. 7, 8 und 9 näher erläutert werden, in welchen für gleiche Teile mit gleichen Funktionen dieselben Bezugsziffern verwendet sind.

In Fig. 7 und 8 besteht die Transportrolle 1 im wesentlichen aus zwei parallel zueinander gerichteten, jeweils stirnseitigen scheibenartigen äußeren Flanschen 2, 3, den vorstehend als feststehenden Seitenteilen bezeichneten Elementen, und aus einem zwischenliegenden Mittelteil 4, dem vorstehend als rotierenden Ringteil bezeichneten Element. Längs der zugehörigen Mittenachse 5 ist eine Durchgangsöffnung 6 vorhanden, in welcher sich wahlweise ein Halterungsteil 7 befindet. Die Transportrolle 1 steht über ihre Durchgangsöffnung 6 mit einem bogenförmigen Trägerelement bzw. Bügelhaken 8 eines Bügels in Verbindung, auf welchem in der in Rede stehenden Transportanlage Kleidungsstücke gefördert werden. Hierzu legt das Mittelteil 4 der Transportrolle 1 auf einem nachfolgend näher erläuterten Rollsteg einer Förderbahn der Transportanlage auf, bei deren vorhandener Neigung eine Bewegung der Transportrolle 1 möglich ist.

Wie aus Fig. 8 hervorgeht, liegt das Trägerelement 8 in Gestalt eines Kleiderbügelhakens jeweils an den stirnseitigen Enden des Halterungsteils 7 auf. Das Halterungsteil 7 ist eine hohlzylindrische Buchse, deren Endbereiche jeweils nach außen durch eine Vernietung 24, 25 gebogen sind.

Aus Fig. 7 und 8 ist der innere Aufbau der Transportrolle 1 nicht ohne weiteres erkennbar. Deshalb ist in Fig. 9 die Transportrolle 1 im Schnitt gezeigt. Das zwischen dem ersten Flansch 3 und dem zweiten Flansch 2 befindliche Mittelteil 4 weist einen zum zweiten Flansch 2 gerichteten, einseitig verlängerten Ringsteg 11 des ersten scheibenartigen Flansches 3 mit einer zentralen Bohrung als Durchgangsöffnung 6 einheitlichen Durchmessers auf. Der Ringsteg 11 ist von seiner Anbindung am ersten Flansch 3 bis zu seinem freien, senkrecht zur Mittelachse 4 abgeplatteten Endbereich 2 außenflächig leicht geneigt. Die leicht geneigte Außenfläche des Ringstegs 11 stellt zugleich die Innenlauffläche 12 für die Wälzkörper 13, 14 eines Wälzlagers dar. In der Regel ist eine Vielzahl von Wälzkörpern für ein funktionsfähiges Wälzlager notwendig. Die Innenlauffläche 12 besitzt mittig eine umlaufende rillenförmige Vertiefung 18, die maßgerecht den Außenflächen des Wälzkörpers 13, 14 angepasst ist und in der sich die Wälzkörper 13, 14 bewegen können. Außenseitig umschließt das rotationsfähige Umfangsteil 15 in Form eines Außenrings die Wälzkörper 13, 14 von der Innenlauffläche 12 radial beabstandet, und es weist eine zur Mittelachse 4 senkrecht abgewinkelte scheibenartige Seitenwandung 21 auf, die sich auf der mit dem kleineren Durchmesser versehenen Seite des Ringstegs 11 befindet. Zur Seite des größeren Ringstegdurchmessers bzw. zum ersten Flansch 3 gerichtet ist der Außenring 15 unter anderem aus Montagegründen vorzugsweise offen. Der Außenring 15 ist mit jeweils einem schlitzbedingten geringfügigen Spiel 16, 17 zu den Innenflächen 23, 22 des ersten und des zweiten Flansches 3, 2 versehen. Der Außenring 15 kann an seiner paaraxialen Innenlauffläche 10 ebenfalls eine umlaufende rillenförmige Vertiefung 19 enthalten, die ebenso den Oberflächen des Wälzkörpers 13, 14 angepasst ist.

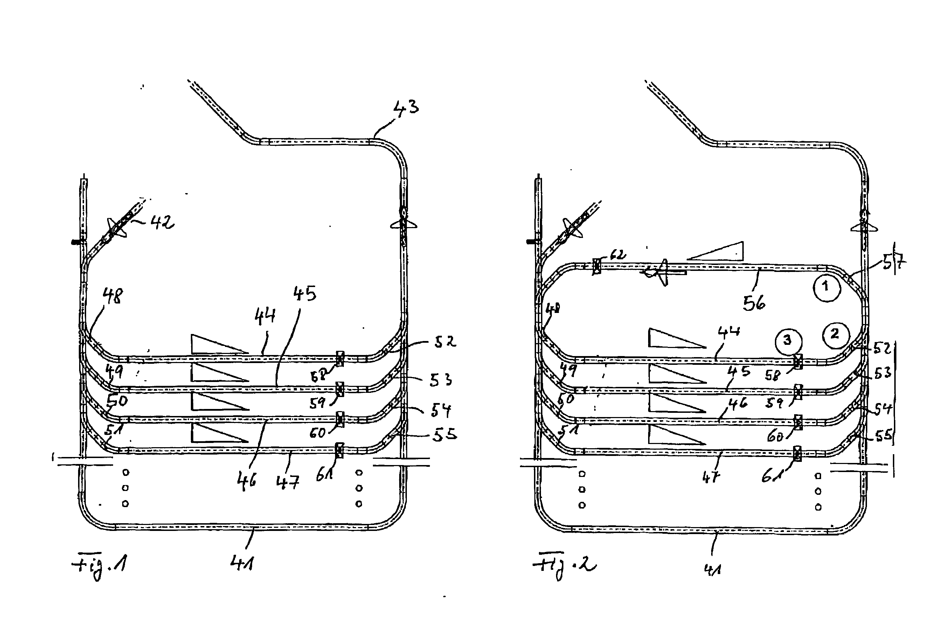

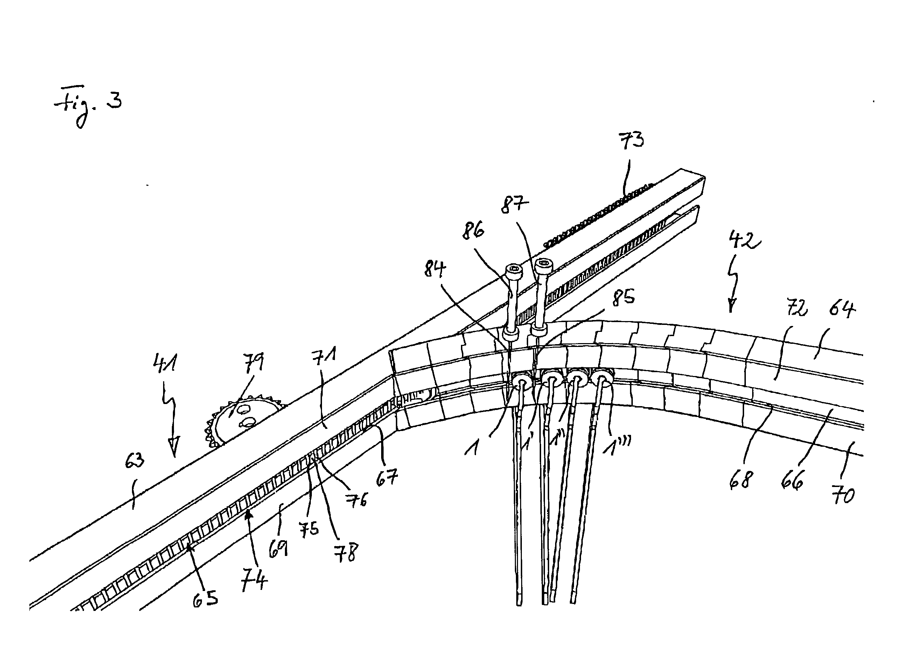

Gegen den freien abgeplatteten Endbereich 20 des Ringstegs 11 ist der zweite scheibenförmige Flansch 2 durch das Halterungsteil 7 fest gehaltert, wobei das Halterungsteil 7 durch eine starre Vernietung 24, 25 den zweiten Flansch 2 an den Endbereich 20 des Ringstegs 11 presst. Durch das hohlzylindrische Halterungsteil 7 ist ein Kanal 26 gebildet, in welchen der Haken 8 eines Kleiderbügels eingeführt und so weit durchgeschoben wird, dass die in Fig. 2 gezeigte Position des Hakens 8 erhalten wird.

Im einfachsten Fall (Fig. 7, 8) kann der zweite Flansch 2 mit Strichkodierungen 37 versehen sein.

In Fig. 9 besitzt der zweite scheibenförmige Flansch 2 lochartige Aussparungen 27, 28, in welche anstelle der in Fig. 7, 8 gezeigten Strichkodierungen 37 elektrische sowie elektronische Bauelemente aufweisende Kodiereinrichtungen (nicht gezeigt) befestigt werden können. Die Kodiereinrichtungen können beispielsweise radial oder kreisförmig angeordnete induktive, magnetische und/oder kapazitive Einrichtungen oder Stifte eines sich vom Flanschmaterial unterscheidenden Materials sein, um daraus die gespeicherten Informationen entnehmen zu können. Die Aussparungen 27, 28 können aber auch eine Ringnut darstellen, in welche elektrische Bauelemente gekoppelt mit ROMund/oder RAM-Speichermodulen eingebracht gehaltert werden können.

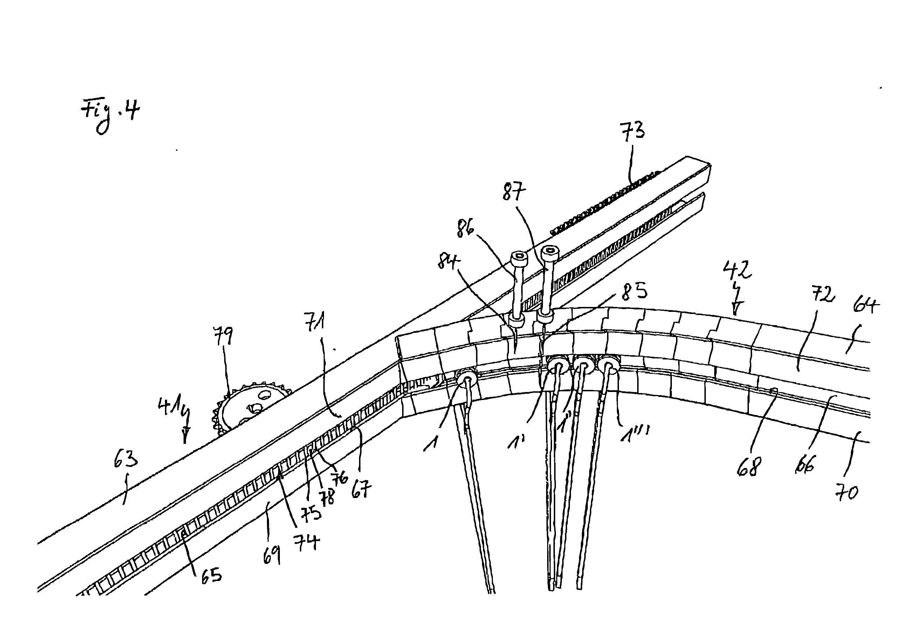

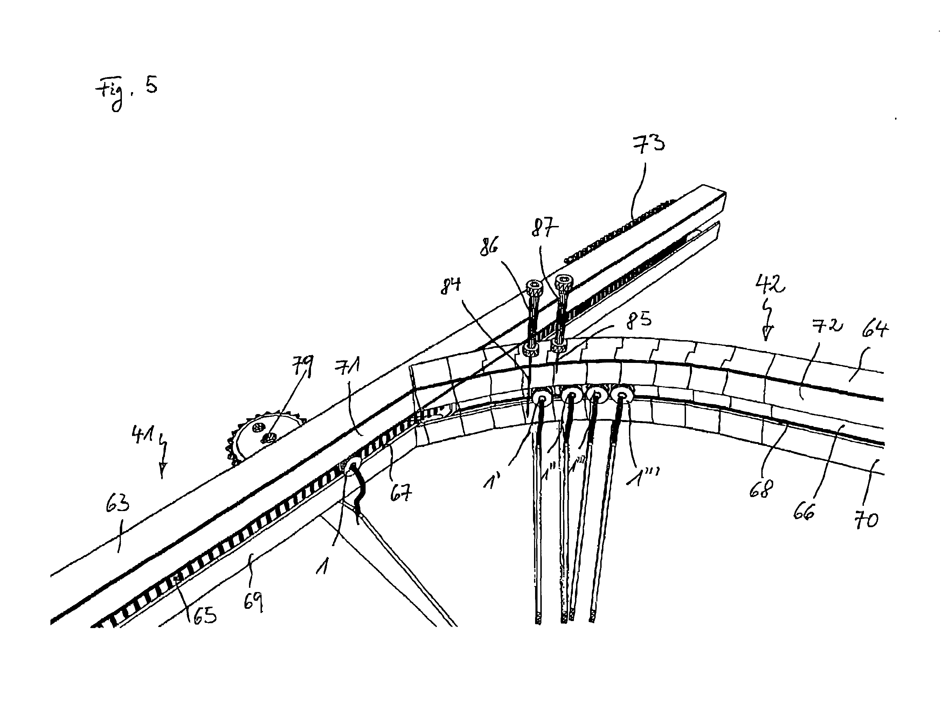

Wie aus Fig. 7 bis 9 hervorgeht, weist in der Transportrolle 1 das Mittelteil vier mit anderen Worten mindestens ein peripheres ringförmiges Umfangsteil 15 auf, das separat von den beiden Flanschen 2, 3 rotationsfähig ist, wobei beide Flansche 2, 3 untereinander und mit dem Umfangsteil 15 derart in Verbindung stehen, dass sich bei einer förderbahnauflagebedingten Rotation des Umfangsteils 15 beide Flansche 2, 3 in einem von der Rotation unabhängigen Ruhezustand befinden. Auf diese Ausgestaltung der Transportrolle beruht die nachfolgend erläuterte erfindungsgemäße Ausbildung der Transportanlage zum Transportieren von insbesondere auf Bügel hängenden Kleidungsstükken. Insbesondere gestattet diese Transportrolle mit feststehenden Außenelementen und rotierendem Innenelement den direkten Angriff eines Transportmittels bzw. einer Schiebeeinrichtung an der Transportrolle. Eine entsprechende Transportanlage ist nachfolgend anhand von Fig. 1 bis 6 erläutert.

Fig. 1 und 2 zeigen schematisch allgemein zwei Ausführungsformen der erfindungsgemäßen Transporteinrichtung für insbesondere von auf Bügeln hängenden Kleidungsstücken, wobei die Anlage gemäß Fig. 1 für eine einstufige Sortierung vorgesehen ist, während die Anlage 2 für eine zweistufige Sortierung vorgesehen ist.

Die in Fig. 1 gezeigte Transportanlage umfasst eine in einem offenen Kreis geführte Förderbahn 41 mit einer Aufgabestelle 42 an einem Ende für unsortierte Ware und mit einem Ende 43 zum Austragen sortierter Ware. Zwischen der Aufgabestelle 42 und dem Austragende 43 der Förderbahn 41 sind mehrere parallele Abwurflinien vorgesehen, von denen in Fig. 1 lediglich vier Abwurflinien 44 bis 47 dargestellt sind. Die Abwurflinien 44 bis 47 zweigen zulaufseitig von der Förderbahn 41 über Weichen 48 bis 51 ab. Auslaufseitig gehen die Abwurflinien 44 bis 47 über Weichen 52 bis 55 erneut in die Förderbahn 41 über. Zwischen ihrem Zulauf und ihrem Auslauf sind die Abwurflinien 44 bis 47 jeweils mit einer Gefällestrecke versehen, um die zulaufende Ware aufgrund ihrer Schwerkraft zu den auslaufseitigen Weichen 52 bis 55 zu überführen. Durch die Abwurflinien ist ein Sortiermittel geschaffen, das vorliegend als einstufig bezeichnet ist, weil die Ware eine oder mehrere der Abwurflinien nur einmal passiert.

Im Gegensatz hierzu zeigt Fig. 2 eine modifizierte Ausbildung der Transportanlage von Fig. 1 mit einer zweistufigen Sortierung von Ware. Zusätzlich zu der in Fig. 1 gezeigten Ausbildung mit mehreren Abwurflinien umfasst die Transportanlage gemäß Fig. 2 eine Rückführlinie 56, die stromabwärts von den Abwurflinien 44 bis 47 über eine Zulaufweiche 57 mit der Förderbahn 41 in Verbindung steht. Andererseits steht die Rückführlinie 56 stromaufwärts von den Abwurflinien 44 bis 47 und stromabwärts von der Aufgabestelle 42 in Verbindung mit der Förderbahn 41. Die Rückführlinie 46 umfasst ebenfalls zum Transport von Ware eine Gefällestrecke, die entgegengesetzt zu den Gefällestrecken der Abwurflinien 44 bis 47 verläuft.

Am Ende jeder Abwurflinie 44 bis 47 ist eine Sammelstelle bzw. eine Schleuse 58 gebildet, mit welcher über die Abwurflinien 44 bis 47 zulaufende Ware gesammelt und gezielt wieder in die Förderbahn 41 einschleusbar ist. Eine ähnliche Sammelstelle 62 befindet sich am Ende der Rückführlinie 56.

Einzelheiten der Transportanlage gemäß Fig. 1 bzw. Fig. 2 gehen aus Fig. 3 bis 5 hervor, welche die Anlage im Bereich der Aufgabestelle 42 im einzelnen zeigt.

Demnach umfasst die Förderbahn 41 ebenso wie die Aufgabestelle 42 eine Profilschiene 63 bzw. 64 mit allgemein C-förmigem Querschnitt. Aufgrund des C-förmigen Querschnitts ist die Profilschiene 63 bzw. 64 allseitig geschlossen, bis auf einen Spalt 65 bzw. 66, der begrenzt ist durch die aufeinander zu weisenden Kanten der C-förmigen Profilschiene. Von diesen beiden Kanten ist die untenliegende bzw. aufwärts weisende Kante als Transportrollen-Laufbahn 67 bzw. 68 gebildet. Die Laufbahn 67 bzw. 68 bildet somit die Oberseite eines Rollstegs 69 bzw. 70, der das eine von aufeinander zu weisenden Enden der C-förmigen Profilschiene 63 mit dazwischenliegendem Spalt 65 bzw. 68 bildet. Auf diesem Rollsteg 69, 70 reitet die in Fig. 7 bis 9 gezeigte Transportrolle 1, von welcher in Fig. 3 bis 5 vier Laufbahnrollen 1, 1', 1" und 1'" gezeigt sind, wobei der Mittelteil 4 jeder Transportrolle im Rollkontakt mit der Laufbahn 67, 68 steht, während die seitlichen, stationären Flansche 2, 3 jeder Transportrolle den Rollsteg 69, 70 beiderseits übergreifen, wodurch die jeweilige Transportrolle seitlich geführt ist. Eine zusätzliche seitliche Führung für die Transportrolle 1 wird durch den dem Rollsteg 69, 70 gegenüberliegenden Führungssteg 71 bzw. 72 bereitgestellt, der das dem Rollsteg 69, 70 gegenüberliegende Ende des C-förmigen Profils 63 bzw. 64 darstellt und der zwischen die beiden Flansche 2, 3 eingreift, ohne jedoch den Mittelteil 4 der Transportrolle 1 zu berühren. Der Rollsteg 69, 70 und der Führungssteg 71, 72 stellen damit zusammenwirkend eine seitliche Zwangsführung für die Transportrolle 1 bereit, so dass diese seitlich nicht aus der Profilschiene 63, 64 austreten kann, in deren Spalt 65, 66 sie jedoch im wesentlichen widerstandslos, d.h. unter Rollwiderstand auf der Laufbahn 67, 68 zu laufen vermag. Zu diesem Rollwiderstand kommt allenfalls dann, wenn das an den Transportrollen hängende Laufgut seitlich verschwenkt, ein kurzzeitiger Kontaktwiderstand zwischen den beiden Flanschen 2, 3 und den Stegen 69 bis 72.

Zum Fördern der Transportrollen auf der im wesentlichen horizontal verlaufenden Förderbahn 41 bzw. in der Profilschiene 63 dient eine Gliederkette 73, die über in Laufrichtung beabstandete Zahnräder außerhalb (wie gezeigt) oder alternativ innerhalb der Profilschiene 63 geführt und über einen nicht gezeigten Elektromotorantrieb angetrieben ist.

Der Lauf der Gliederkette 73 wird auf die Transportrollen mit Hilfe eines kammartigen Förderorgans 74 übertragen, das in der Profilschiene 63 entlang deren Spaltes 65 verläuft. Das kammartige Förderorgan ist mittels eines nicht gezeigten Verbindungsmittels mit der Gliederkette 73 verbunden, das in der Profilschiene angeordnet ist und bei außenliegender Gliederkette 73 einen ebenfalls nicht gezeigten Schlitz in der Profilschiene 63 in Gegenüberlage zum Spalt 65 durchgreift. Die Zinken des kammartigen Förderorgans 74 verlaufen senkrecht zur Durchgangsöffnung 6 der im Spalt 63 laufenden Transportrollen sowie senkrecht zur Transportrollen-Laufbahn 68. Im dargestellten Ausführungsbeispiel sind die Zinken des kammartigen Förderorgans als gleichmäßig beabstandete Mitnahmestifte für das freie Ende des hakenförmigen Trägerelements 6 des Waren-Halterungsteils 7 von z.B. in Gestalt eines Kleiderbügels gebildet. Die Zwischenräume bzw. Spalträume 78 der Zinken bzw. Mitnahmestifte, von denen in Fig. 3 bis 5 zwei Stifte mit den Bezugsziffern 75 und 76 bezeichnet sind, und die Höhe dieser Räume sind derart gewählt, dass das freie Ende des Trägerelements in diese Räume 78, aus der Aufgabestelle 42 kommend, einzutreten vermag und dann zusammen mit der jeweiligen Transportrolle und der daran hängenden Ware mitgenommen wird. Aufgrund des speziellen Aufbaus der Transportrolle steht dabei der zum Innern der Profilschiene weisende Flansch 2 bzw. 3 der Transportrolle im Eingriff mit zumindest den beiden den Aufnahmespaltraum festlegenden Mitnahmestiften 75, 76, ohne dass während der Förderbewegung zwischen diesen Teilen eine Relativbewegung und damit verbunden Reibung auftritt, weil diese Flansche feststehend sind und nicht die Rollbewegung des Rollorgans der Transportrolle mitmachen, wie vorstehend anhand von Fig. 7 bis 9 erläutert.

Im folgenden wird anhand von Fig. 3 bis 4 der Zulauf von Transportrollen über die Aufgabestelle 42 in die Förderbahn 41 erläutert.

Die Aufgabestelle 42 ist, wie vorstehend angeführt, durch eine Profilschiene 64 mit C-förmigem Querschnitt entsprechend der Profilschiene 63 festgelegt. Die Profilschiene 64 besitzt zumindest im Bereich der Aufgabestelle 42, also dort, wo die Profilschiene 64 seitlich in die Profilschiene 63 einmündet, eine Gefällestrecke, deren tiefster Punkt an der Einmündung der Profilschiene 64 in die Profilschiene 63 zu liegen kommt. Aufgrund dieser Gefällestrecke bewegen sich die am anderen Ende der Profilschiene 64 in diese eingespeisten Transportrollen mit den an ihnen hängenden Kleiderbügeln schwerkraftangetrieben die Gefällestrecke hinunter. Um die Transportrollen 1 bis 1'" vereinzelt und zum passenden Zeitpunkt in die Förderbahn 41 bzw. die Profilschiene 63 einzuspeisen, nämlich dann, wenn ein vorbestimmter Spaltraum 78 des kammartigen Förderorgans 74 die Einmündungsstelle der Profilschiene 64 in die Profilschiene 63 erreicht, ist eine Rückhalteeinrichtung an der Aufgabestelle 42 vor der Mündungsstelle gebildet. Diese Rückhalteeinrichtung umfasst zwei Rückhaltestifte 84, 85, die in Längserstreckungsrichtung der Profilschiene 64 hintereinander unter Abstand angeordnet sind. Die Rückhaltestifte 84, 85 sind in an sich bekannter Weise bezüglich ihrer Axiallage verstellbar mittels Antriebszylindern 86, 87, mit deren Hilfe die Rückhaltestifte 84, 85 wahlweise in eine Position vor einer jeweiligen Transportrolle verschiebbar sind.

In Fig. 3 befindet sich der in Bezug auf die Förderrichtung in der Profilschiene 64 vordere Rückhaltestift 84 vor der vorauseilenden Transportrolle 1, so dass diese gegen den Rückhaltestift 84 anliegt, während der hintere Rückhaltestift 85 sich auf der Rückseite dieser Transportrolle 1 vor der nächsten nacheilenden Transportrolle 1' befindet. Damit ist die vorauseilende Transportrolle 1 bereits von den nacheilenden Transportrollen 1', 1" und 1"' abgetrennt, von denen die Rolle 1' durch den hinteren Rückhaltestift 85 rückgehalten ist, während die nachfolgenden Transportrollen 1", 1'" aneinander sowie an der Transportrolle 1' anliegen.

Ausgehend von der Stellung in Fig. 3 wird als nächstes der vordere Rückhaltestift 84 dann von seiner Position vor der Transportrolle 1 rückgezogen, wenn ein in Fig. 3 verdeckter Rückhaltestift 82a unmittelbar vor der Einmündung der Profilschiene 64 in die Profilschiene 63 zu liegen kommt. Zu diesem Zweck wird der Lauf der Gliederkette 73 mit der Betätigung des Antriebszylinders 86 für den vorderen Rückhaltestift 84 z.M. mittels eines mit der Gliederkette 73 zusammenwirkenden Synchronisationszahnrads 79in nicht näher dargestellter Weise synchronisiert unter Berücksichtigung der Zeit, die benötigt wird für den Lauf der freigegebenen Transportrolle 1 aus ihrer Rückhalteposition bei ausgefahrenem Rückhaltestift 84 bis zur Einmündungsstelle der Profilschiene 64 in die Profilschiene 63. Dort greift das einwärts (das zum Innern der Profilschiene 63) weisende freie Ende des hakenartigen Trägerelements 8, das von der Durchgangsöffnung 6 der Transportrolle vorsteht, in den Spaltraum 78 des Förderorgans 74, der in der Mündungsstelle zu liegen kommt, so dass die Transportrolle über das Trägerelement mitgenommen wird.

Als nächstes läuft, wie in Fig. 5 gezeigt, eine weitere Transportrolle 1"" nach und bildet damit die letzte Transportrolle der aneinander anliegenden Transportrollen 1', 1", 1'", 1"", von denen die nunmehr vorauseilende Transportrolle 1' an dem nunmehr erneut ausgefahrenen Rückhaltestift 84 zur Anlage kommt, nachdem der hintere Rückhaltestift 84 eingefahren worden ist. Zur Vereinzelung der nunmehr vorauseilenden Transportrolle 1' wird der hintere Rückhaltestift 85 wieder ausgefahren, und die beginnend mit Fig. 3 gezeigte Vereinzelung der vorauseilenden Transportrolle erfolgt erneut, wie vorstehend ausgeführt.

Eine ähnliche Ausgestaltung der Transportanlage wie für die Aufgabestelle findet sich beispielsweise am Übergang der Auswurflinien 44 bis 47 auf die Förderbahn 41. An dieser Stelle sind gegebenenfalls die Weichen 52 bis 55 entsprechend der Profilschiene 64 an der Aufgabestelle 42 gebildet.

Fig. 6 zeigt eine Ausleitstelle von der Förderbahn 41 auf eine der Auswurflinien, beispielsweise die Auswurflinie 44 gemäß Fig. 1 bzw. 2. Die Auswurflinie 44 umfasst wiederum eine Profilschiene 88 ähnlichen gekrümmten Verlaufs wie die Profilschiene 64, die in die Förderbahn mündet. Die Profilschiene 88 mündet ebenfalls in die Profilschiene 63, welche die Förderbahn 41 festlegt. Die Profilschiene 88 dient jedoch zum Ausleiten von Transportrollen und der an ihnen hängenden Ware aus der Förderbahn 41. Da nicht jede Transportrolle aus der Profilschiene 63 in die Profilschiene 88 überführt werden soll, ist zwischen diesen beiden Profilschienen 63 und 68 eine Weiche gebildet. Diese Weiche besteht aus einem verschwenkbar an der Profilschiene 63 angelenkten Rollstegabschnitt 89 und einem schwenkbar an der Profilschiene 63 angelenkten Führungsstegabschnitt 90. Im eingeschwenkten Zustand bildet der Rollstegabschnitt 89 einen Teil des Rollstegs 69 der Profilschiene 63, während der Führungsstegabschnitt 90 im eingeschwenkten Zustand einen Teil des Führungsstegs 71 der Profilschiene 63 bildet. Im ausgeschwenkten Zustand bzw. dann, wenn die Weiche so gestellt ist, dass Transportrollen aus der Profilschiene 63 auf die Profilschiene 88 ausgeleitet werden sollen, unterbricht der Rollsteg 89 den Rollsteg 69 und der Führungsstegabschnitt 90 unterbricht den Führungssteg 71 und diese Abschnitte 89, 90 der Weiche schließen sich in der ausgeschwenkten Stellung nunmehr an einen Rollsteg 91 bzw. einen Führungssteg 92 der Profilschiene 88 an, wodurch an der Weiche ankommende Transportrollen in die Profilschiene 88 ausgeleitet werden.

Zur Verstellung der Weiche 89, 90 dient ein lediglich schematisch als C-förmige Klammer dargestellter Weichen-Schaltmechanismus 93.

Sobald eine sich auf der Weiche befindliche Transportrolle die Weiche verlässt, wird sie durch die Gefälle auf der Abwurflinie durch Schwerkrafteinwirkung zu einer Sammelstelle transportiert.

### BEZUGSZEICHENLISTE

- 1: Transportrolle
- 2: zweiter Flansch
- 3: erster Flansch
- 4: Mittelteil
- 5: Mittelachse
- 6: Durchgangsöffnung
- 7: Halterungsteil
- 8: Trägerelement
- 11: Ringsteg
- 12: Innenlauffläche
- 13: Wälzkörper
- 14: Wälzkörper
- 15: Umfangsteil
- 16: Spiel
- 17: Spiel
- 18: erste rillenförmige Vertiefung
- 19: zweite rillenförmige Vertiefung
- 20: freier Endbreich
- 21: scheibenartige Seitenwandung
- 22: Innenfläche
- 23: Innenfläche
- 24: Vernietung
- 25: Vernietung
- 26: Kanal
- 27: Aussparung
- 28: Aussparung

- 36: Rastausnehmung
- 37: Kodiereinrichtung
- 41: Förderbahn
- 42: Aufgabestelle
- 43: Austragende
- 44: Abwurflinie
- 45: Abwurflinie
- 46: Abwurflinie
- 47: Abwurflinie
- 48: Weiche
- 49: Weiche
- 50: Weiche
- 51: Weiche
- 52: Weiche
- 53: Weiche
- 54: Weiche
- 55: Weiche
- 56: Rückführlinie
- 57: Weiche
- 58: Sammelstelle
- 59: Sammelstelle
- 60: Sammelstelle
- 61: Sammelstelle
- 62: Sammelstelle
- 63: Profilschiene
- 64: Profilschiene
- 65: Spalt
- 66: Spalt
- 67: Laufbahn
- 68: Laufbahn
- 69: Rollsteg
- 70: Rollsteg
- 71: Führungssteg
- 72: Führungssteg
- 73: Gliederkette
- 74: Förderorgan
- 75: Mitnahmestift
- 76: Mitnahmestift
- 78: Spaltraum
- 79: Synchronisationszahnrad
- 84: Rückhaltestift
- 85: Rückhaltestift
- 86: Antriebszylinder
- 87: Antriebszylinder
- 88: Profilschiene
- 89: Rollstegabschnitt
- 90: Führungsstegabschnitt
- 91: Rollsteg
- 92: Führungssteg
- 93: Weichenschaltmechanismus

## Patentansprüche

1. Anlage zum Transport von Objekten, insbesondere von auf Bügeln hängenden Kleidungsstücken, auf Förderbahnen mittels einer Transportrolle (1) mit zwei parallel zueinander gerichteten beabstandeten, stirnseitige Flanschen (2, 3) und einem zwischenliegenden Mittelteil (4) sowie eine zwischen den Flanschen (2, 3) und dem Mittelteil (4) mittig hindurchführende Durchgangsöffnung (6), wobei das Mittelteil (4) mindestens ein peripheres, ringförmiges Umfangsteil (15) aufweist, das separat von beiden Flanschen rotationsfähig ist, und wobei sich bei einer förderbahnauflagebedingten Rotation des Umfangsteils (15) beide Flansche (2, 3) in einem von der Rotation unabhängigen Ruhezustand befinden, wobei ein hakenförmiges Trägerelement (8) für ein zu transportierendes Objekt die Durchgangsöffnung (6) durchsetzt und mit seinem freien Ende aus dieser vorsteht, wobei
die Förderbahn (41) einen feststehenden Rollsteg (69) mit einer Transportrollen-Laufbahn (67) auf ihrer Oberseite umfasst, auf welchem die Transportrolle (1) reitet, deren beiden Flansche (2, 3) den Rollsteg (69) seitlich umgreifen und deren Umfangsteil (15) mit der Transportrollen-Laufbahn (67) im Eingriff steht, **dadurch gekennzeichnet dass** am Rollsteg entlang, seitlich von diesem zumindest entsprechend der Stärke des dort überstehenden Flansches (2, 3) beabstandet ein kammartiges Förderorgan (74) geführt ist, dessen Lücken zum Eingriff des freien Endes des hakenförmigen Trägerelements (8) bemessen sind.

2. Anlage nach Anspruch 1, **dadurch gekennzeichnet, dass** das kammartige Förderorgan (74) mit einer parallel zur Förderbahn (41) verlaufenden Gliederkette (73), vor allem einer Seitenbogenkette einer Antriebseinrichtung verbunden ist.

3. Anlage nach Anspruch 2, **dadurch gekennzeichnet, dass** das kammartige Förderorgan (74) Zinken in Gestalt von gegenseitig regelmäßig beabstandeten Mitnahmestiften (75, 76) umfasst, die sich senkrecht zur Durchgangsöffnung der Transportrolle (1) sowie senkrecht zur Transportrollen-Laufbahn (68) erstrecken.

4. Anlage nach Anspruch 1, 2 oder 3, **dadurch gekennzeichnet dass** der Rollsteg (69) Teil einer Profilschiene (63) bildet, in welcher das Förderorgan (74) geführt ist.

5. Anlage nach Anspruch 4, **dadurch gekennzeichnet, dass** die Profilschiene (63) allgemein C-förmigen Querschnitt besitzt, wobei eine aufwärts weisende Kante der C-Profilschiene (63) die Transportrollen-Laufbahn (67) bildet.

6. Anlage nach Anspruch 5, **dadurch gekennzeichnet, dass** das kammartige Förderorgan (74) mit seinen Zinken (75, 76) den Spalt (65) zwischen den aufeinander zu weisenden Kanten der C-Profilschiene (63) vollständig überspannt.

7. Anlage nach einem der vorangehenden Ansprüche, **dadurch gekennzeichnet, dass** sie eine Aufgabestelle bzw. Einschleusstelle (42) für die Transportrolle(n) (1, 1', 1'', 1''') in die Förderbahn (41) mit einer Gefällestrecke aufweist, welche seitlich in die Förderbahn (41) mündet und einen feststehenden Rollsteg (70) mit einer Transportrollen-Laufbahn 68) auf ihrer Oberseite umfasst, der in den Rollsteg (69) der Förderbahn einmündet, wobei in der Gefällestrecke, auf welcher die Transportrolle(n) durch Schwerkrafteinwirkung zu der Förderbahn (41) gefördert wird bzw. werden eine Einrichtung zum Rückhalten der Transportrolle(n) (1, 1', 1'', 1''') vorgesehen ist, die synchron zur Anwesenheit einer Lücke bzw. eines Spaltraums (78) des Förderorgans (74) in der Aufgabestelle (42) und unter Berücksichtigung der Zeitdauer bis zum Eintreffen der jeweiligen Transportrolle an dieser Lücke freigebbar ist bzw. sind.

8. Anlage nach Anspruch 7, **dadurch gekennzeichnet, dass** die Rückhalteeinrichtung (84 - 87) zur vereinzelten Freigabe einer Mehrzahl von an der Rückhalteeinrichtung anstehenden Transportrollen ausgelegt ist.

9. Anlage nach Anspruch 8, **dadurch gekennzeichnet, dass** die Rückhalteeinrichtung (84 - 87) einen Rückhaltestift (84) zur Freigabe einer vorauseilenden Transportrolle (1) und einen weiteren Rückhaltestift (85) zum Rückhalten nacheilender Transportrollen (1', 1'', 1''') umfasst, wobei die Rückhaltestifte (84, 85) in Richtung ihrer Längsachsen zwischen einer Rückhaltestellung vor der jeweiligen Transportrolle und einer Freigabestellung beweglich sind, in welcher sie außer Eingriff mit der jeweiligen Transportrolle stehen.

10. Anlage nach Anspruch 9, **dadurch gekennzeichnet, dass** die Rückhaltestifte (84, 85) im wesentlichen senkrecht zur Transportrollen-Laufbahn (68) der Gefällestrecke beweglich sind.

11. Anlage nach einem der Ansprüche 1 bis 10, **dadurch gekennzeichnet, dass** die Förderbahn (41) zumindest eine von ihr abzweigende Ausschleusstelle bzw. Abwurflinie (44) mit einer Gefällestrecke umfasst, welche einen feststehenden Rollsteg mit einer Transportrollen-Laufbahn auf ihrer Oberseite aufweist und auf welcher die Transportrolle(n) durch Schwerkrafteinwirkung zu einer Sammelstelle gefördert wird bzw. werden, wobei die Ausschleusstelle (44) eine Weiche (89, 90, 93) umfasst, die wahlweise an die Förderbahn (41) anstellbar ist, um die Transportrolle(n) unter Ausrücken des freien Endes des Ihre Durchgangsöffnung (6) durchsetzenden hakenförmigen Trägerelements (8) auf die Gefällestrecke der Ausschleusstelle zu überführen.

## Claims

1. System for transporting objects, particularly articles of clothing suspended on hangers, on conveyor lines by means of a transport roller (1) having two spaced side-flanges (2, 3) directed in parallel to one another, a centre portion (4) situated between the latter, and a through-opening (6) passing through centrally between the flanges (2, 3) and the centre portion (4), wherein the centre portion (4) has at least one peripheral, annular, circumferential portion (15) which is able to rotate separately from the two flanges, wherein, in the event of a rotation of the circumferential portion (15) as a result of its resting on the conveyor line, the two flanges (2, 3) remain in a rest state, irrespective of the rotation, wherein a hook-like carrier member (8) for an object to be transported passes through the through-opening (6) and, at its free end, projects therefrom, wherein the conveyor line (41) comprises a fixed lip (69) for rolling movement having a transport-roller track (67) on its top edge-face, on which track runs (67) the transport roller (1), whose two flanges (2, 3) fit laterally round the lip (69) for rolling movement and whose circumferential portion (15) engages with the transport-roller track (67), **characterised in that** there is guided along the lip for rolling movement, spaced away therefrom at least by an amount corresponding to the thickness of the flange (2, 3) overhanging at that point, a comb-like conveyor member (74) whose interstices are sized to engage the free end of the hook-like carrier member (8).

2. System according to claim 1, **characterised in that** the comb-like conveyor member (74) is connected to a link-chain (73) extending parallel to the conveyor line (41), and in particular to a sidebow chain of a drive means.

3. System according to claim 2, **characterised in that** the comb-like conveyor member (74) comprises teeth in the form of regularly spaced entraining pins (75, 76) which extend perpendicularly to the through-opening of the transport roller (1) and perpendicularly to the transport-roller track (68)

4. System according to claim 1, 2 or 3, **characterised in that** the lip (69) for rolling movement is part of a profiled rail (63) in which the conveyor member (74) is guided.

5. System according to claim 4, **characterised in that** the profiled rail (63) is of a generally C-shaped cross-section, with an upward-facing edge of the C-profiled rail (63) forming the transport-roller track (67).

6. System according to claim 5, **characterised in that** the teeth (75, 76) of the comb-like conveyor member (74) completely: span the gap between the facing edges of the C-profiled rail (63).

7. System according to one of the foregoing claims, **characterised in that** it has an entry or feed-in point (42) for the transport roller(s) (1, 1', 1",1'") into the conveyor line (41), which entry or feed-in point (42) has a downhill section which joins up laterally with the conveyor line (41) and which comprises a lip (70) for rolling movement having a transport-roller track (68) on its top edge-face, which lip (7) joins up with the lip (69) for rolling movement of the conveyor track, there being provided in the downhill section, along which the transport roller(s) is/are fed to the conveyor line (41) under the prompting of the force of gravity, a means of retaining the transport roller(s) (1, 1', 1",1'"), which means is releasable in synchronisation with the presence at the entry point (42) of an interstice or gap (78) in the conveyor member (74), with due allowance for the elapsed time until the given transport roller arrives at this interstice.

8. System according to claim 7, **characterised in that** the retaining means (84 - 87) is arranged to release individually a plurality of transport rollers queuing at the retaining means.

9. System according to claim 8, **characterised in that** the retaining means (84 - 87) comprises a retainer pin (84) to release a leading transport roller (1) and a further retainer pin (85) to retain trailing transport rollers (1', 1",1'"), the retainer pins (84, 85) being movable in the direction of their longitudinal axes between a retaining position in front of the given transport roller and a releasing position in which they are out of engagement with the given transport roller.

10. System according to claim 9, **characterised in that** the retainer pins (84, 85) are movable substantially perpendicularly to the transport-roller track (68) in the downhill section.

11. System according to one of claims 1 to 10, **characterised in that** the conveyor line (41) comprises at least one separating-out point or discharge line (44) having a downhill section which has a fixed lip for rolling movement having a transport-roller track on its top edge-face and along which the transport roller(s) is/are fed to a collecting point under the prompting of the force of gravity, the separating-out point (44) comprising a set of points (89, 90, 93) which can be selectively set at an angle to the conveyor line (41) to transfer the transport roller(s) to the downhill section at the separating-out point while disengaging the free end of the hook-like carrier member (8), which member (8) passes through the through-opening(s) (6) in the transport roller(s).

## Revendications

1. Installation pour le transport d'objets, en particulier de vêtements suspendus sur des cintres, sur des voies de transport au moyen d'un galet (1) comprenant deux joues latérales (2, 3) orientées parallèlement avec un écart entre elles et une partie centrale (4) située entre les deux joues, ainsi qu'une ouverture de passage (6) traversant les joues (2, 3) et la partie centrale (4) en leur centre, ladite partie centrale (4) présentant au moins une partie périphérique (15) de forme annulaire, qui peut tourner séparément des deux joues et, lors d'une rotation de la partie périphérique (15) due au fait qu'elle repose sur la voie de transport, les deux joues (2, 3) se trouvant dans un état de repos indépendant de la rotation, un élément porteur en forme de crochet (8) pour un objet à transporter traversant l'ouverture de passage (6) et dépassant de celle-ci avec son extrémité libre, la voie de transport(41) comprenant une nervure de roulement fixe (69) avec une voie de roulement pour galets de transport (67) sur sa face supérieure sur laquelle chevauche le galet de transport (1) dont les deux joues (2, 3) entourent latéralement la nervure de roulement (69) et dont la partie périphérique (15) est en prise avec la voie de roulement des galets de transport (67), **caractérisé en ce qu'**un organe de transport (74) en forme de peigne est guidé le long de la nervure de roulement latéralement à celle-ci avec un écart de celle-ci au moins correspondant à l'épaisseur de la joue (2, 3) qui y dépasse, les vides dudit organe de transport (74) étant dimensionnés pour s'engrener avec l'extrémité libre de l'élément porteur en forme de crochet (8).

2. Installation selon la revendication 1, **caractérisée en ce que** l'organe de transport en forme de peigne (74) est relié avec une chaîne à maillons (73) orientée parallèlement à la voie de transport (41), sur toute une chaîne en courbe latérale d'un dispositif d'entraînement.

3. Installation selon la revendication 2, **caractérisée en ce que** l'organe de transport en forme de peigne (74) comprend des dents en forme de broches d'entraînement (75, 76) situées à intervalles réguliers les unes des autres, qui s'étendent perpendiculairement à l'ouverture de passage du galet de transport (1) ainsi que perpendiculairement à la voie de roulement des galets de transport (68).

4. Installation selon la revendication 1, 2 ou 3, **caractérisée en ce que** la nervure de roulement (69) forme une partie d'un rail profilé (63) dans lequel l'organe de transport (74) est guidé.

5. Installation selon la revendication 4, **caractérisée en ce que** le rail profilé (63) possède de manière générale une section en forme de C, une arête regardant vers le haut du rail profilé en C (63) formant la voie de roulement des galets de transport (67).

6. Installation selon la revendication 5, **caractérisée en ce que** l'organe de transport (74) en forme de peigne recouvre entièrement avec ses dents (75, 76) l'écart (65) entre les arêtes se regardant l'une l'autre du rail profilé en C (63).

7. Installation selon l'une des revendications précédentes, **caractérisée en ce qu'**elle présente un point d'alimentation ou un point d'insertion (42) pour le(s) galet(s) de transport (1, 1', 1", 1''') dans la voie de transport (41) avec une section en pente qui débouche latéralement dans la voie de transport (41) et comprend une nervure de roulement fixe (70) avec une voie de roulement de galets de transport (68) sur sa face supérieure, ladite nervure débouchant dans la nervure de roulement (69) de la voie de transport, un dispositif pour retenir le(s) galet(s) de transport (1, 1', 1", 1''') étant prévu dans la section en pente sur laquelle le(s) galet(s) est (sont) transporté(s) par gravité vers la voie de transport (41), le(s)dit(s) galet(s) pouvant être libéré(s) de manière synchronisée avec la présence d'un vide ou d'un espace de fente (78) de l'organe de transport (74) au point d'alimentation (42) et en tenant compte de la durée jusqu'à l'arrivée du galet de transport à ce vide.

8. Installation selon la revendication 7, **caractérisée en ce que** le dispositif de retenue (84 à 87) est conçu pour libérer séparément une pluralité de galets de transport attendant au dispositif de retenue.

9. Installation selon la revendication 8, **caractérisée en ce que** le dispositif de retenue (84 à 87) comprend une tige de retenue (84) pour libérer un galet de transport (1) en avance et une autre tige de retenue (85) pour retenir les uns après les autres des galets de transport (1', 1", 1''') les tiges de retenue (84, 85) étant mobiles dans la direction de leur axe longitudinal entre une position de retenue avant le galet de transport et une position de libération dans laquelle elles ne sont pas en prise avec le galet de transport correspondant.

10. Installation selon la revendication 9, **caractérisée en ce que** les tiges de retenue (84, 85) sont mobiles essentiellement perpendiculairement à la voie de roulement des galets de transport (68) de la section en pente.

11. Installation selon l'une des revendications 1 à 10, **caractérisée en ce que** la voie de transport (41) comprend au moins un point de sortie ou ligne d'évacuation (44) dérivant de celle-ci avec une section en pente qui présente une nervure de roulement fixe avec une voie de roulement de galets de transport sur sa face supérieure et sur laquelle le(s) galet(s) de transport est(sont) transporté(s) par gravité vers un point de rassemblement le point d'évacuation (44) comprenant un aiguillage (89, 90, 93) qui peut être réglé au choix sur la voie de transport (41) pour faire passer le(s) galet(s) de transport sur la section en pente du point d'évacuation en débrayant l'extrémité libre de l'élément porteur (8) en forme de crochet traversant l'ouverture de passage (6) dudit(desdits) galet(s).
